# EUROPEAN PATENT APPLICATION

(11) **EP 1 939 601 A2**
(43) Date of publication of application: **02.07.2008**
(21) Application number: 07380383.5
(22) Date of filing: 27.12.2007
(51) Int. Cl.: G01M 11/06

(54) **Universal rack for testing vehicle headlights**

(30) Priority: 28.12.2006 ES 200602795 P
(71) Applicant: Seat, S.A., 08760 Martorell (ES)
(72) Inventor: Carrasco Garcia, Jordi, c/o Seat, S.A., 08760 Martorell (Barcelona) (ES); Jimenez López, Jose Antonio, c/o Seat, S.A., 08760 Martorell (Barcelona) (ES); Binefa Mas, Arturo, c/o Seat, S.A., 08760 Martorell (Barcelona) (ES)
(74) Representative: Carvajal y Urquijo, Isabel

(57) **Abstract**

The invention relates to a universal rack for testing vehicle headlights, formed by a vertical frame (1) and by a support structure (2) which can be fixed to the hood (8). The frame (1) carries the headlights (14) to be tested and an electric control panel (15). The upper (3) and lower (4) sides of the frame have front guides for assembling the electric control panel and headlight supports (13) ,and rear guides for assembling the columns carrying connectors for securing the support structure (2).

## Description

### Field of the Invention

The present utility model relates to a universal rack for testing vehicle headlights, and more specifically for testing vehicle headlight illumination.

The rack of the invention is designed to assemble sets of headlights in vehicles already existing on the market and to carry out necessary illumination tests.

### Background of the Invention

To carry out the headlight illumination tests for vehicles, a vehicle prototype is currently constructed for each lighting test, corresponding to the headlights for a certain vehicle model. To that end, adapted cars and sets of headlights for testing and validating the operation of the headlights are manufactured. This makes it necessary to construct or adapt multiple prototypes of vehicles and of headlight sets, for the purpose of conducting all the tests considered necessary, which involves a considerable cost increase of the process.

The object of this invention is to simplify, speed up and reduce the cost of the entire headlight test process by means of a rack which is assembled in an already manufactured vehicle, without needing to modify it, and which allows conducting all the desired tests for different headlights. The need to construct prototypes for different headlights is thus eliminated.

The mentioned rack is formed by a vertical frame with a horizontal rectangular contour, carrying the headlights to be tested, as well as an electric control panel having means of connecting to the headlights, means of connecting to a power supply, preferably the vehicle battery, and command and control means. The rack further comprises a frame support structure having means for fixing it to the hood of a vehicle. Finally the rack includes means of supporting and anchoring the assembly to the front-end of the vehicle in which it is assembled.

The frame has along its upper and lower horizontal sides, at least, guides for assembling different components, such as headlight supports, the electric control panel, rear columns with an adjustable position, etc. To that end, the sides of the frame can be formed by a tubular profile, with a square section for example, having along each of its walls a channel that is partially constricted at its opening, along the entire length thereof. This channel houses the head of a screw projecting through the constricted opening in a portion in which a retaining head is threaded.

The headlight supports can consist of planar surrounds which are supported on the horizontal sides of the frame, to which they are fixed by means of the screws assembled in the guides of said sides. Each surround carries a headlight which is assembled therein by means of threaded rods which allow adjusting the separation and inclination of the headlight with respect to the surround. The surround can further have, from its upper and lower edges, coplanar pins provided with vertical mounting holes through which the screws assembled in the guides of the frame are passed, to allow adjusting the height of the surround with respect to the horizontal sides of the frame.

As regards the electric control panel, it can comprise a base formed by a planar plate which is supported and fixed on the front guides of the horizontal sides of the frame, also by means of the screws assembled in the guides of said sides.

The frame has at the rear part two vertical columns, which are provided with guides through which a the guides of the horizontal sides of the frame are fixed in turn, to adjust the height or position of the frame with respect to the columns.

The support structure of the rack is formed by longitudinal and transverse bars carrying suction cups for the support and securing on the hood of the vehicle.

Each of the rear columns of the frame has articulated at its upper end a sleeve which is intended to receive the front end of one of the longitudinal bars of the support structure. This sleeve has locking means for the locking to the column and radial tightening screws on the housed end of the bar. These sleeves not only allow fixing the frame to the support structure, but also adjusting the inclination of said frame with respect to the mentioned structure.

The means of supporting the rack to the front-end of the vehicle consist of an inflatable cushion which is arranged between the frame and the front-end of the vehicle to be used as a shock absorbing element. The means of anchoring the rack to the front-end of the vehicle can in turn be formed by a belt which is passed under the hood of the vehicle and above two of the suction cups belonging to different longitudinal bars. By means of the tightening this belt, the securing of the suction cups to the hood of the vehicle is assured. The means of anchoring further include two adjustable side clamps carrying at one end a suction cup which can be fixed to the adjacent side of the vehicle body, whereas the other end is connected to the frame.

### Brief Description of the Drawings

The attached drawings show an embodiment of the rack of the invention, with reference to which a more detailed description of the invention will be made.

In the drawings:
Figure 1 is a perspective view of the front part of a vehicle in which the frame and support structure forming part of the rack of the invention are assembled.
Figure 2 is a view similar to Figure 1, showing the headlights assembled in the frame of the rack.
Figure 3 is a perspective view of one of the suction cups used as elements for supporting and fixing the support structure to the hood of the vehicle.
Figure 4 is a perspective view of the connecting clamp between one of the longitudinal bars and the transverse bar of the support structure.
Figure 5 is a rear partial perspective view of the frame of the rack in an assembled position on the support structure.
Figure 6 is a cross-sectional view of the profiles forming the sides and columns of the frame of the rack.
Figure 7 is a perspective view of the upper end of one of the columns of the frame.
Figure 8 corresponds to detail "A" of Figure 5 on a larger scale.
Figure 9 is a perspective view of one of the surrounds supporting the headlights, assembled on the frame.
Figure 10 is a rear perspective view of the central area of the frame, in which the electric control panel is assembled.

### Detailed Description of an Embodiment

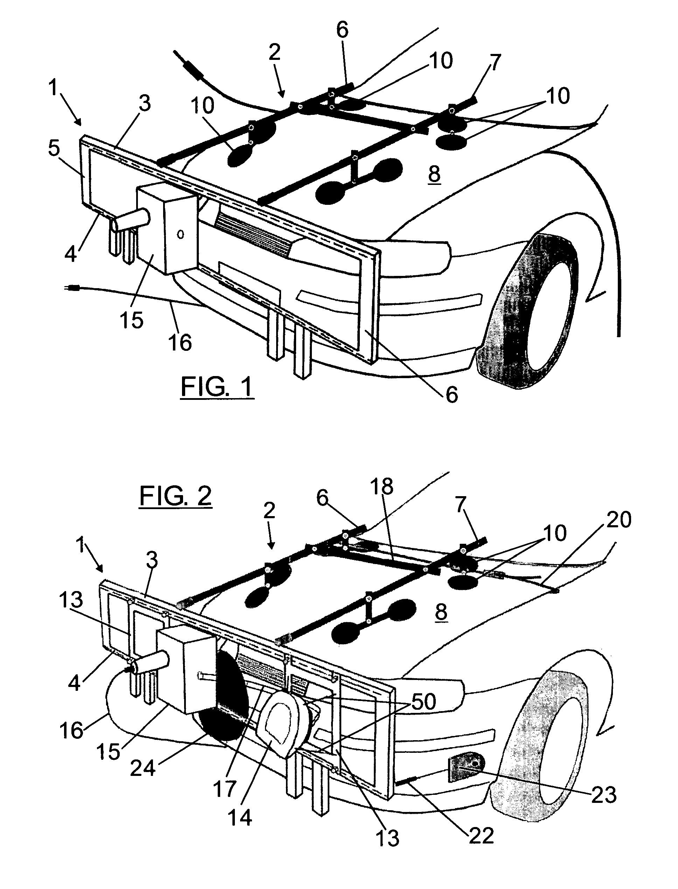

Figure 1 shows a rack for testing vehicle headlights, formed according to the invention, which is formed by a frame which is generally reference with number 1, and by a support structure 2.

The frame 1 is arranged in an approximately vertical position, and has a horizontal rectangular contour, with two horizontal longitudinal sides, referenced with numbers 3 and 4, and two transverse sides referenced with numbers 5 and 6.

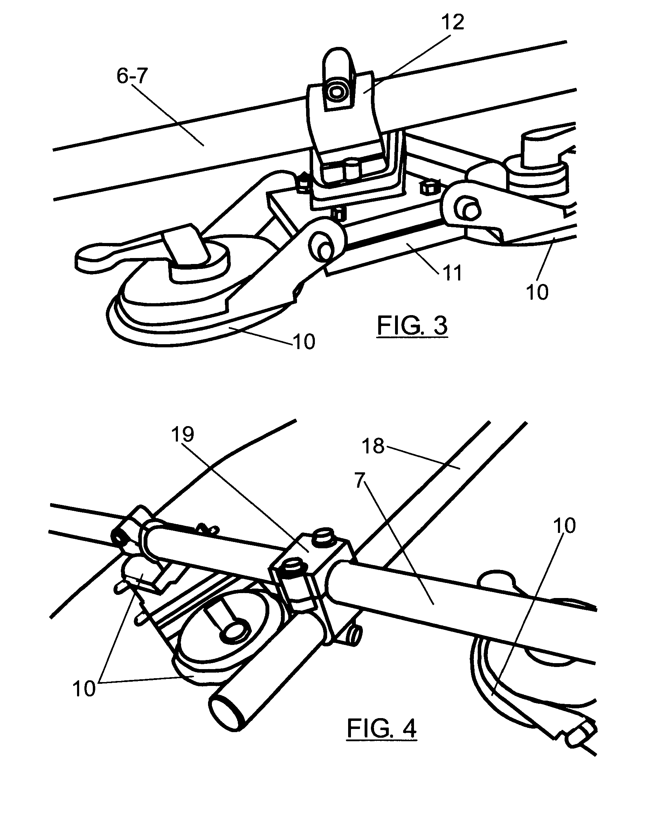

The support structure is in turn formed by two longitudinal bars 6 and 7, which are fixed on the hood 8 of an automotive vehicle by means of pairs of suction cups 10, which, as can best be seen in Figure 3, are articulated to a central body 11 to which an upper clamp 12 is fixed through which the corresponding bar 6-7 passes.

As can best be seen in Figure 2, two supports 13 are frontally fixed to the frame 1, each of which supports carries a headlight 14. An electric control panel 15 is also fixed to this frame, from which panel there starts a cable 16 for the connection to a power supply, which can be formed by the battery itself of the vehicle. Connectors 17 for the headlights 14 also start from the panel 15. The panel 15 can further include other connecting and control elements for the operation of the headlights.

The support structure 2 is completed with a transverse bar 18 which is fixed to the longitudinal bars 6 and 7 by means of clamps 19, Figure 4.

The fixing of the structure 2 to the hood 8 can be reinforced by means of a belt 20, Figure 2, which is passed under the hood 8 and over two of the pairs of suction cups 10. The frame 1 can be fixed to the front part of the vehicle by means of two side clamps 22 carrying at one end a suction cup 23 which can be fixed to the adjacent side of the vehicle body, whereas the opposite end they are connected to the frame 1.

A means of supporting formed by an inflatable air cushion 24 can be arranged between the frame 1 and the front-end of the vehicle.

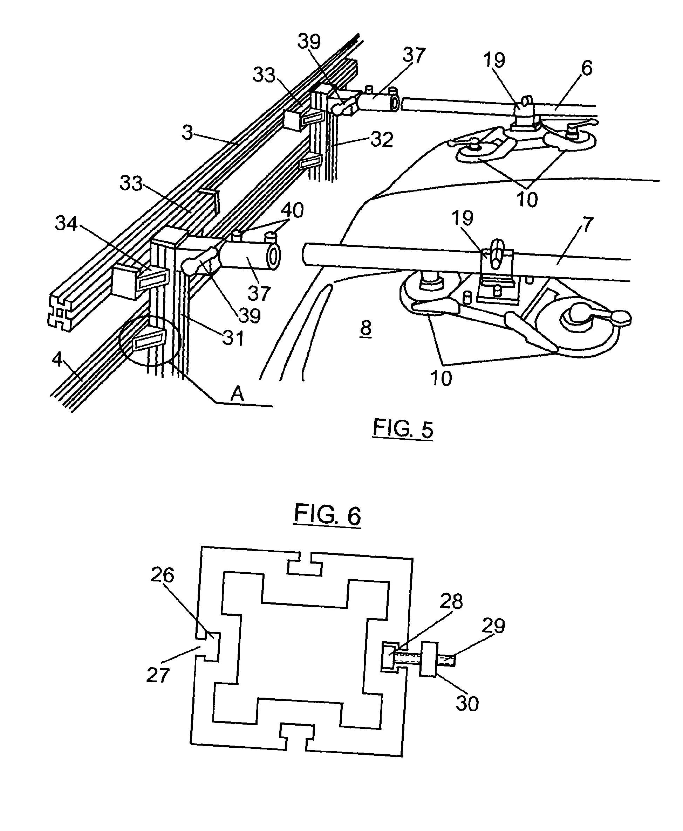

The sides of the frame 1 can be formed by a tubular profile, as shown in Figure 6 for example, with a square section, having along each of its walls a central groove 26 the opening 27 of which is partially constricted along the entire length of the channel. This channel houses the head 28 of a screw 29 partially projecting from the constriction 27 in a portion in which a head 30 is threaded.

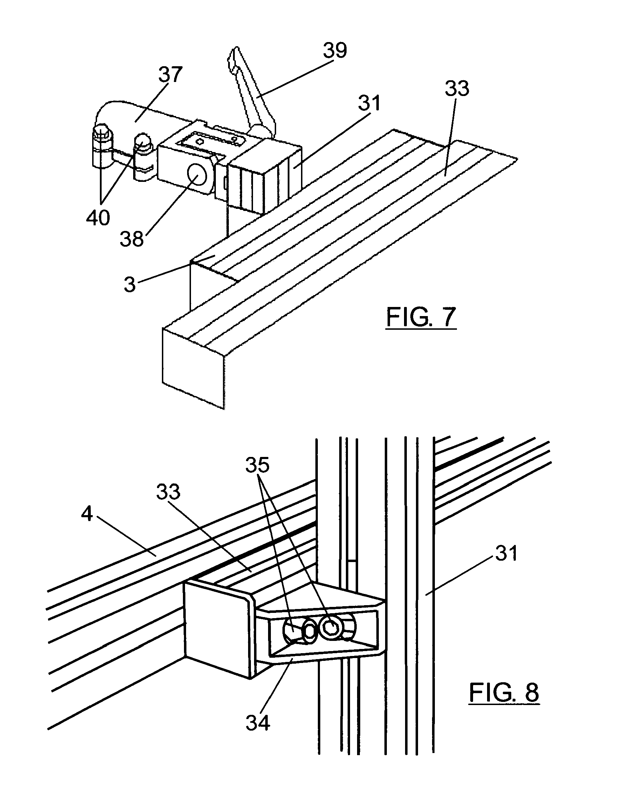

As can best be seen in Figure 5, the frame 1 has fixed at the rear part two columns 31 and 32 running between the horizontal sides 3 and 4 of the frame. These columns can be fixed directly to the sides 3 and 4 or by placing the separating parts 33, formed by profile sections identical to those forming the sides of the frame. The columns 31 and 32 will also be formed by profiles with the same configuration. The columns 31 and 32 can be fixed to the separators 33 by means of corners 34 which, as can best be seen in Figure 8, have a straight angular contour, to be supported against the separators 33 and columns 31 or 32 and have in the walls slit holes for the passage of screws 35 which can be fixed to the grooves of the separators 33 in the way described with reference to Figure 6.

As can be seen in Figures 5 and 7, each of the columns 31 and 32 has a sleeve 37 articulated at its upper end by means of a hinge pin 38 which can be locked by means of a handle 39. The front end of the bars 6 and 7 of the support structure is introduced in each of the sleeves 37, the joint being fixed by means of the screws 40 of the sleeves 37.

With the mentioned constitution, once the support structure 2 has been fixed to the hood 8 of a vehicle, the frame 1 is fixed to the bars 6 and 7 of the structure 2, by means of the sleeves 37. The height of the frame 1 can be adjusted through the columns 31 and 32, and the inclination of the mentioned frame 1 can be adjusted by means of the articulation of the sleeves 37, through the horizontal shaft 8. Once the desired positions have been selected, they are fixed by means of the screws 35, Figure 8, and handle 39, Figure 7.

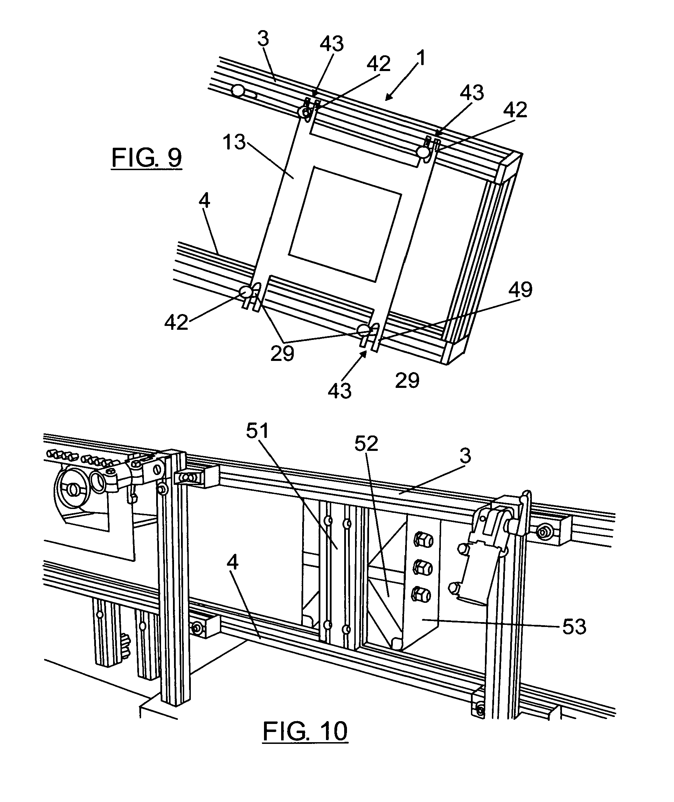

As can best be seen in Figure 9, the headlight support 13 can be formed by a planar surround having, from the upper and lower edges, coplanar pins 42 provided with mounting holes or slits 43, through which the screws 29 assembled in the channels 26 forming the guides of the sides of the frame pass. The height of the surrounds 13 with respect to the horizontal sides 3 and 4 of the frame 1 can thus be adjusted. A headlight 14, Figure 2, is assembled in each support 13 by means of threaded rods 50 whereby the separation and inclination of the headlight with respect to the surround 13 can be regulated.

Finally, as can best be seen in Figure 10, an intermediate column 51 can be arranged between the horizontal sides 3 and 4 of the frame, on which column there is fixed a plate 52 forming the electric control panel, which can be protected by means of a cover 53, which as a whole forms the panel 15 of Figure 2.

The rack with the described constitution allows placing models of headlights in the desired position, height with respect to the ground, horizontal distance and inclination, in order to review the illumination tests. The headlights can fed through the battery itself of the vehicle, thus allowing the execution of dynamic tests in circulation. The rack allows simultaneously installing and testing two sets of headlights. The control of the operation of the headlights from inside the vehicle by means of the necessary elements and connections is also provided.

## Claims

1. A universal rack for testing vehicle headlights, **characterized in that** it comprises a vertical frame (1) with a horizontal rectangular contour, carrying the headlights (14) to be tested and an electric connection control panel (15); a frame support structure (2), provided with means of fixing to the hood of a vehicle; and means of supporting and anchoring the assembly to the front-end of the vehicle; the frame of which has along its upper and lower horizontal sides front guides for assembling the electric control panel and headlight supports (13), and rear guides for assembling columns (31-32) with an adjustable position, which columns carry connectors (37) for the securing to the support structure; and the support structure of which is formed by longitudinal (6-7) and transverse (18) bars carrying suction cups (10) for the support and securing on the hood (8) of the vehicle.

2. A rack according to claim 1, **characterized in that** the front and rear guides of the sides of the frame consist of longitudinal grooves (26) that are partially closed therealong, in which the head (28) of screws (29) can be housed and move, which screws project in a portion in which a tightening head or nut (30) is threaded.

3. A rack according to claim 1, **characterized in that** the supports (13) of the headlights (14) consist of planar surrounds which are supported on the horizontal sides (3-4) of the frame, to which it is fixed by means of the screws (29) assembled in the guides (26) of said sides; each surround carrying a headlight assembled by means of threaded rods (50) which allow adjusting its separation and inclination with respect to said surround.

4. A rack according to claim 3, **characterized in that** upper and lower coplanar pins (42) provided with vertical mounting holes or slits (43) project from the mentioned surround, through which holes the screws (29) assembled in the guides of the frame pass.

5. A rack according to claim 1, **characterized in that** the electric control panel (15) comprises a plate (52) which is supported and fixed on the front guides of the horizontal sides of the frame by means of the screws (29) assembled in the guides (26) of said sides; said panel having means of connecting (17-16) for the headlights and for a power supply, as well as command and control means.

6. A rack according to claim 1, **characterized in that** the frame has two rear columns (31-32), which are provided with vertical guides (26) through which they are fixed to the horizontal sides of the frame by means of screws (29) assembled in the guides of said sides, each column having a sleeve (37) articulated at its upper end, which sleeve is intended to receive the front end of one of the longitudinal bars (6-7) of the support structure (2), the sleeve of which has a handle (39) for locking the column and tightening screws (40) for the securing on the housed end of the bar.

7. A rack according to claim 1, **characterized in that** the support structure (2) is formed by two longitudinal bars (6-7) and a transverse bar (18), connected by means of intermediate clamps (19), the longitudinal bars of which carry two suction cups (10) each, which cups are fixed on the outer surface of the hood (8).

8. A rack according to claim 1, **characterized in that** the mentioned means of supporting consist of an air cushion (24) arranged between the frame (1) and the front-end of the vehicle.

9. A rack according to claim 1, **characterized in that** the mentioned means of anchoring comprise a belt (20) which is passed under the hood (8) and over two suction cups (10) belonging to different longitudinal bars (6-7), and in two adjustable side clamps (22) carrying at one end a suction cup (23) which can be fixed at the adjacent side of the vehicle body, whereas at the opposite end they are connected to the frame (1).
